# EUROPÄISCHE PATENTSCHRIFT

(11) **EP 1 609 972 B1**
(45) Veröffentlichungstag und Bekanntmachung des Hinweises auf die Patenterteilung: **08.03.2017**
(21) Anmeldenummer: 05020051.8
(22) Anmeldetag: 15.06.2001
(51) Int. Cl.: F02D 41/02, F02D 41/40

(54) **VERFAHREN ZUM BETRIEB EINES DIESELMOTORS**
METHOD TO OPERATE A DIESEL ENGINE
PROCÉDÉ DE FONCTIONNEMENT D'UN MOTEUR DIESEL

(30) Priorität: 21.06.2000 DE 10029504
(43) Veröffentlichungstag der Anmeldung: 28.12.2005
(62) Teilanmeldung aus: 01964991.2
(73) Patentinhaber: Daimler AG, 70327 Stuttgart (DE)
(72) Erfinder: Adler, Holger, 70197 Stuttgart (DE); Allmendinger, Klaus, Dr., 89429 Bachhagel (DE); Becker, Dirk, 76646 Bruchsal (DE); Erlenmayer, Oliver, 75177 Pforzheim (DE); Hasert, Andreas, 73630 Remshalden (DE); Hemberger, Hans-Hubert, 73274 Notzingen (DE); Kerckhoff, Anton, Dr., 70191 Stuttgart (DE); Kurze, Stefan, Dr., 71706 Markgröningen (DE); Lenz, Michael, 70734 Fellbach (DE); Liebscher, Thomas, 70736 Fellbach (DE); Merten, Ulrich, 70771 Leinfelden-Echterdingen (DE); Roll, Andreas, 73734 Esslingen (DE); Ruzicka, Norbert, 71144 Steinenbronn (DE)
(74) Vertreter: JENSEN & SON

(56) Entgegenhaltungen:
- EP-A- 0 732 485
- EP-A- 0 831 226
- EP-A- 1 077 319
- DE-A1- 19 622 832

## Beschreibung

Die Erfindung betrifft ein Verfahren zum Betrieb eines Dieselmotors der im Oberbegriff des Anspruchs 1 angegebenen Gattung.

Bei bekannten Verfahren wird ein Luftverhältnis λ des zu verbrennenden Kraftstoffes und der separat zugeführten Verbrennungsluft von einer Steuereinheit nach vorgegebenen Werten für den jeweiligen Betriebszustand des Motors eingestellt. Die hierfür vorgesehenen Stellmittel werden von der Steuereinheit beaufschlagt. Die Steuereinheit bestimmt dabei die Menge des zu verbrennenden Kraftstoffes, die zum Erreichen der gewünschten Betriebslast des Dieselmotors führt. Oft wird dabei ein unterstöchiometrisches Kraftstoff/Luft-Verhältnis eingestellt und der Dieselmotor in sofern mit magerer Gemischbildung betrieben. Als Umschaltkriterium auf eine Sonderbetriebsart wird der Steuereinheit ein Sollwert einer Betriebsmessgröße des Dieselmotors vorgegeben, bei dem ein bestimmtes Kraftstoff/Luft-Verhältnis nach Vorgabewerten für diese Sonderbetriebsart einzustellen ist. Dies kann beispielsweise dann der Fall sein, wenn eine Einrichtung zur Abgasnachbehandlung vorgesehen ist, wie etwa ein Speicherkatalysator, welcher turnusmäßig zu desorbieren ist. Hierzu wird der Sonderbetriebsart die erforderliche Desorptions-Atmosphäre durch Einstellen des Kraftstoff/Luft-Verhältnisses geschaffen. Ein solches Verfahren ist beispielsweise aus der DE 197 53 718 C1 bekannt, welches die Auswertung bestimmter Kriterien zur Umschaltung zwischen zwei verschiedenen Brennverfahren nutzt. Bei Feststellung des Umschaltkriteriums wird in die Sonderbetriebsart zur Regeneration eines dem Dieselmotor nachgeschalteten Speicherkatalysators umgeschaltet.

Die Umschaltung in eine Sonderbetriebsart des Dieselmotors bei Vorliegen eines bestimmen Umschaltkriteriums ist auch in der DE 199 39 988 A1 beschrieben, wobei in der Sonderbetriebsart ein Speicherkatalysator hinsichtlich der Stickoxid-Salze regeneriert werden soll. Hierzu wird in dem Regenerationsmodus als Sonderbetriebsart ein reduzierend auf den Katalysator wirkendes Abgas erzeugt.

Aus der DE 197 50 226 C1 ist eine Motorregelsystem bekannt, dass in Abhängigkeit von Kennfeldern den Betrieb eines Dieselmotors regelt. Dabei sind in einem Motorsteuergerät separate Kennfeder für eine Betriebsart mit magerer Verbrennung und eine Betriebsart mit fetter, kraftstoffreicher Verbrennung abgespeichert. Die zeitliche Dauer der Regeneration der Einrichtung zur Abgasnachbehandlung ist bei den bekannten Verfahren sehr lang. Auch ist oft die Umschaltung in die Sonderbetriebsart und zurück für den Fahrer eines von dem Motor angetriebenen Kraftfahrzeugs spürbar, was nicht erwünscht ist.

Die EP-A-0 831 226 offenbart ein Verfahren zum Betrieb eines Dieselmotors, bei dem ein Luftverhältnis des zu verbrennenden Kraftstoffes und der zugeführten Verbrennungsluft von einer Steuereinheit nach vorgegebenen Werten für den Betriebszustand des Motors durch Ansteuerung hierfür vorgesehener Stellmittel einstellt und dabei die der angeforderten Betriebslast des Dieselmotors entsprechenden Menge zu verbrennenden Kraftstoffes bestimmt, wobei die Steuereinheit bei Feststellung eines als Umschaltkriterium vorgegebenen Wertes einer Betriebsmeßgröße des Dieselmotors auf eine Sonderbetriebsart zur Regeneration einer Einrichtung zur Abgasnachbehandlung umschaltet und das Kraftstoff/Luft-Verhältnis nach Vorgabewerten für diese Betriebsart einstellt, wobei beider Sonderbetriebsart mindestens eine zeitlich von einer Haupteinspritzung abgesetzte Nacheinspritzung von Kraftstoff in einem derart späten Zeitraum während des Zyklus erfolgt, daß der dabei eingespritzte Kraftstoff mit dem bereits vorher zugemessenen und entzündeten Kraftstoff verbrannt wird.

Der vorliegenden Erfindung liegt die Aufgabe zugrunde, ein Verfahren zum Betrieb eines Dieselmotors der gattungsgemäßen Art zu schaffen, bei dem in der Sonderbetriebsart die Betriebsbedingungen verbessert sind.

Diese Aufgabe wird erfindungsgemäß mit den Merkmalen des Anspruchs 1 gelöst.

Erfindungsgemäß ist in der Sonderbetriebsart mindestens eine zeitlich von der Haupteinspritzung abgesetzte Nacheinspritzung von Kraftstoff vorgesehen, wobei der Zeitraum der Nacheinspritzung derartig spät während des Zyklus gelegt wird, dass der dabei eingespritzte Kraftstoff mit dem bereits brennenden Kraftstoff verbrannt wird. Auf diese Weise wird ein Abgas mit hoher Temperatur und Enthalpie gebildet. Damit kann sowohl die Regeneration von Partikelfiltern gefördert werden, bei denen ein überstöchiometrischer Betrieb vorgesehen ist, als auch eine effiziente Schwefelregeneration von NOx-Speicherkatalysatoren im unterstöchiometrischen Betrieb erreicht werden. Das erfindungsgemäße Verfahren schafft sowohl bei überstöchiometrischer Verbrennung, also fetter Gemischbildung, als auch unterstöchiometrischer Verbrennung mit magerem Kraftstoff/Luft-Gemisch reduzierend auf Katalysatoroberflächen wirkende Abgase. Die gesamte zu verbrennende Kraftstoffmenge wird in mehreren Teileinspritzungen eingebracht, wobei die Kraftstoffmenge, die vor der erfindungsgemäß mitbrennenden Nacheinspritzung abgegeben wird, mehreren Haupteinspritzungen oder auch einer beliebigen Anzahl an Voreinspritzungen zugemessen werden kann. Vorteilhaft kann die mitbrennende Nacheinspritzmenge auch in mehreren Nacheinspritzungen zugemessen werden.

Besonders vorteilhaft wird die mitbrennende Kraftstoffmenge der Nacheinspritzung entsprechend dem Betriebszustand des Motors dosiert und so letztlich durch die Einstellung der Nacheinspritzmenge die Betriebslast des Motors einregelt. Zweckmäßig kann dabei auch der Einspritzzeitpunkt der Nacheinspritzung entsprechend dem Betriebszustand von der Steuereinheit eingestellt werden. Die vor der mitbrennenden Nacheinspritzung erfolgenden Teileinspritzungen stellen bei früher Verbrennungslage eine Formung des Einspritzverlaufes dar, an den die Nacheinspritzung in Menge und Zeitpunkt an den Motorbetrieb anpassbar ist.

In vorteilhafter Ausgestaltung der Erfindung erhöht die Steuereinheit während einer Umschaltphase beim Umschalten in den Sonderbetriebszustand und zurück die Kraftstoffmenge der mitbrennenden Nacheinspritzung bei gleichzeitiger Reduzierung der Haupteinspritzmenge aufeinander folgender Zyklen in entsprechender Menge bis zum Erreichen der vorgesehenen Nacheinspritzmenge. Entsprechend wird beim Rückschalten in den Normalbetriebszustand die Nacheinspritzmenge reduziert bei analoger Erhöhung der Haupteinspritzmenge. So kann ein Übergang von magerer Gemischbildung mit Kraftstoff/Luft-Verhältnissen λ < 1 auf fette, kraftstoffreiche Verbrennung mit Luftverhältnissen λ > 1 dargestellt werden. Der Übergang von magerer zu fetter Verbrennung während der Umschaltphase kann mit kontinuierlich oder diskontinuierlich veränderten Mengen der Haupteinspritzung und der angepassten mitbrennenden Nacheinspritzung erfolgen. Als Regelgröße der Änderung der Einspritzmengen wird ein indiziertes Moment des Dieselmotors herangezogen, welches während der Umschaltphase konstant gehalten wird. Auf diese Weise erfolgt die Umschaltung bzw. die Rückschaltung der Betriebszustände völlig ruckfrei und ist für den Führer eines Kraftfahrzeuges nicht spürbar.

Um in der Sonderbetriebsart die zur Regeneration eines Katalysators erforderliche Abgaszusammensetzung zu schaffen, kann es zweckmäßig sein, dem Abgas Kraftstoff zuzusetzen. Der zugesetzte Kraftstoff wird in der Abgasatmosphäre gecrackt und die dabei entstehenden Kohlenwasserstoffradikale tragen zur Senkung der Abgasemission des Dieselmotors bei. Die Zusetzung von Kraftstoff kann durch eine oder mehrere zusätzliche Nacheinspritzungen vorgenommen werden, welche im Anschluss an die erfindungsgemäß mitbrennenden Nacheinspritzungen erfolgt. Optional kann aber auch eine in Menge und Zeitpunkt unabhängig vom Motorbetrieb dosierbare Kraftstoffeinspritzung in die Abgasleitung des Dieselmotors vorgesehen sein.

Mit dem erfindungsgemäßen Verfahren kann die Effizienz der Regeneration von NOx-Adsorbersystemen erhöht werden, welche unter bestimmten Voraussetzungen (Speicherkapazität, aktives Temperaturfenster) die Stickoxide von Brennkraftmaschinen bei magerer Verbrennung (überstöchiometrischer Verbrennung mit λ > 1 und demnach Restsauerstoff im Abgas) speichern. Das erfindungsgemäße Verfahren stellt rasch sauerstofffreies Abgas (λ < 1) mit möglichst hohem Reduktionsmittelgehalt bereit, welches zur Regeneration solcher NOx-Adsorbersysteme, also Desorption von NOx und gleichzeitiger NOx-Umsatz zu Stickoxid N₂ benötigt wird. Mit dem erfindungsgemäß mitbrennenden Kraftstoff der Nacheinspritzung werden ebenso rasch hohe Temperaturen des Abgases erreicht, welche die als Katalysatorgift wirkenden Ablagerungen von Schwefelverbindungen entfernen. Auch sind mit den hohen Temperaturen Partikelfilter rascher regenerierbar. Bekannte Katalysatoren benötigen nach dem Kaltstart eine gewisse Zeit bis zum Erreichen ihrer Starttemperatur. Durch den Einsatz des erfindungsgemäßen Brennverfahrens kann diese Zeit aufgrund der deutlich höheren Abgastemperatur gegenüber bekannten Verfahren verkürzt werden, wodurch eine erheblich geringere Abgasemission beim Warmlauf des Dieselmotors erreicht wird.

Bei der Einstellung bzw. Regelung des Kraftstoff/Luft-Verhältnisses kann zweckmäßig auch die Menge an rückgeführtem und der Frischluft beigemischtem Abgas berücksichtigt werden, wobei die Steuereinheit als Stellglied der Regelung ein Abgasrückführungsventil ansteuert, das in einer Abgasrückführungsleitung zwischen Abgastrakt und Einlasstrakt des Dieselmotors angeordnet ist. In einer Weiterbildung der Erfindung regelt die Steuereinheit neben der Einstellung der Einspritzparameter den Druck der zugeführten Frischluft zweckmäßig über Drosseleinrichtungen im Einlassbereich und eine Aufladeeinrichtung im Abgasbereich des Dieselmotors. Die Druckregelung kann alternativ über das Abgasrückführungsventil und die Aufladeeinrichtung als Stellglieder erfolgen.

Weiterhin regelt die Steuereinheit vorteilhaft den Massendurchsatz der Frischluft, wobei die Steuereinheit das Abgasrückführungsventil als Stellglied unter Berücksichtigung eines Messsignals eines Luftmassenmessers einsetzt. Die Regelung des Massendurchsatzes kann auch über Drosselklappen als Stellglieder erfolgen. Die Steuereinheit koordiniert dabei sämtliche Stellglieder und führt die Stellbewegungen in Abhängigkeit der erfassten Regelabweichungen vom Sollwert im gesamten Betriebsbereich des Dieselmotors kontinuierlich nach. Mit entsprechenden Vorgabewerten auf Kennfeldern wird das erfindungsgemäße Verfahren auch in den stationären Betriebszuständen des Dieselmotors realisiert. Zum Einstellen eines lastneutralen Überganges wird vor dem Auslösen der Einspritzmaßnahmen beim Umschalten der Betriebszustände, also vor der Einspritzmengenänderung des Kraftstoffs der mitbrennenden Nacheinspritzung, der Luftpfad kontinuierlich eingeregelt, nämlich die Regelung des Saugrohrdruckes und des Massenstroms der Frischluft.

Die Erfindung ist nachstehend anhand eines Ausführungsbeispieles näher erläutert. Es zeigen:
- Fig. 1: eine schematische Darstellung eines Dieselmotors,
- Fig. 2: ein schematisches Schaubild der Bestimmung von Einstellwerten in der Steuereinheit.

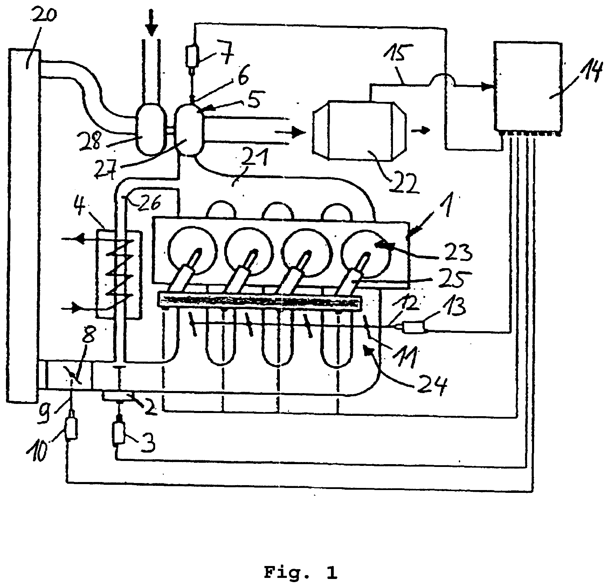

Fig. 1 zeigt einen Dieselmotor 1 mit vier Zylindern 23, denen jeweils ein Injektor 25 zugeordnet ist. Die aus einer gemeinsamen Druckleitung gespeisten Injektoren 25 spritzen nach Maßgabe eines Steuersignals einer Steuereinheit 14 Kraftstoff direkt in die Zylinder 23 ein, welcher mit separat zugeführter Verbrennungsluft verbrannt wird. Die Frischluft wird über eine Ansaugleitung 20 zugeführt, an die mittels Einlassstutzen 24 die Zylinder 23 angeschlossen sind. Das Abgas aller Zylinder 23 wird über eine Abgasleitung 21 abgeführt und vor dem Ausstoß in die Umwelt durch einen Katalysator 22 geleitet. Die Abgasleitung 21 ist über eine Abgasrückführungsleitung 26 mit der Ansaugluftleitung 20 verbunden. Nach Öffnen eines Abgasrückführungsventils 2 kann so Abgas des Dieselmotors 1 der Frischluft beigemischt werden, wobei das rückgeführte Abgas vor dem Einströmen in die Ansaugluftleitung 20 durch einen Abgaskühler 4 herabgekühlt wird.

Das Verhältnis λ des in die Zylinder eingespritzten Kraftstoffes zu der Verbrennungsluft wird von der Steuereinheit 14 bestimmt, welche durch entsprechende Ansteuerung der Injektoren 25 die von ihnen abgegebene Kraftstoffmenge pro Arbeitsspiel als auch die den Zylindern 23 zugeführte Frischgasmenge einstellt. Abhängig von der eingesetzten Einrichtung zur Abgasnachbehandlung (Katalysator 22) kann der Dieselmotor dabei entweder mit unterstöchiometrischer Verbrennung oder überströchiometrischer, d.h. fetter Verbrennung mit Kraftstoffüberschuss (λ > 1) betrieben werden, wie es beispielsweise zur Desorption von NOx-Steuerkatalysatoren erforderlich ist. Stellt die Steuereinheit 14 das Vorliegen eines als Umschaltkriterium vorgegebenen Wertes einer Betriebsmessgröße 15 des Dieselmotors fest, so wird auf eine Sonderbetriebsart zur Regeneration des Katalysators umgeschaltet und ein für diese Betriebsart vorgegebenes Kraftstoff/Luft-Verhältnis eingestellt. Zur Feststellung des Umschaltkriteriums kann beispielsweise der Steuereinheit der Sättigungsgrad des Katalysators 22 als Messsignal 15 eingegeben werden.

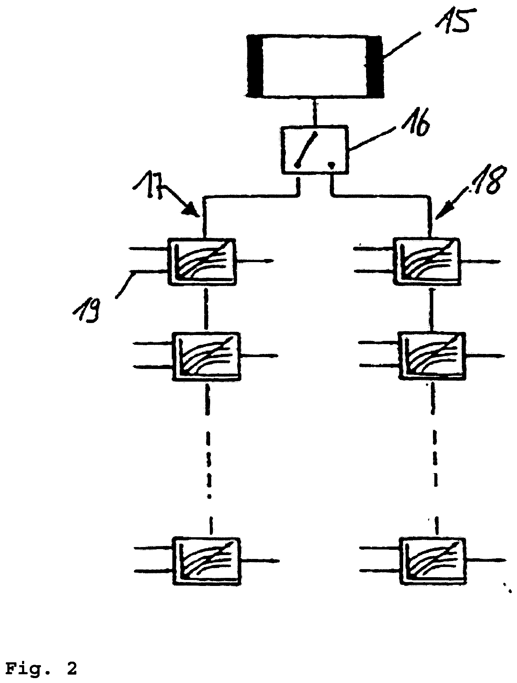

Wie in Fig. 2 schematisch dargestellt ist, verfügt die Steuereinheit 14 über Kennfelder, aus denen sie in Abhängigkeit laufend ermittelter Betriebsparameter geeignete Stellgrößen für die von ihr kontrollierten Stellglieder zur Einstellung des Kraftstoff/Luft-Verhältnisses ausliest. Dabei ist der Steuereinheit ein Kennfeldpfad 17 zur Einstellung einer mageren Verbrennung und entsprechenden Kennfeldern für alle Stellglieder zugeordnet. Ein Kennfeldpfad 18 zur Einstellung einer fetten, überstöchiometrischen Verbrennung enthält Kennfelder für jedes anzusteuernde Stellglied mit entsprechenden Stelldaten. Abhängig von dem Messwert des Umschaltkriteriums 15 (Sättigungsgrad des Katalysators) wird einer der Kennfeldpfade 17, 18 zum Auslesen geöffnet, was schematisch durch Einstellung eines Schalters 16 dargestellt ist. Bei einem Normalbetrieb mit magerer Verbrennung, bei dem der Kennfeldpfad 17 mit seinen einzelnen Kennfeldern aktiviert ist, wird erfindungsgemäß bei vorliegen des Umschaltkriteriums in den Sonderbetriebszustand umgeschaltet und entsprechend auf die Betriebsart mit fetter Verbrennung gewechselt.

Jeder Kennfeldpfad enthält dabei ein Kennfeld mit Einspritzparametern für die Injektoren 25 und für jedes weitere Stellglied, welches von der Steuereinheit 14 zur Einstellung des Kraftstoff/Luft-Verhältnisses herangezogen wird. Zweckmäßig wird dabei das Abgasrückführungsventil 2 über einen Stellantrieb 3 von der Steuereinheit 14 eingesetzt. Die Abgasatmosphäre zur effektiven Desorption des Katalysators 22 wird in der Sonderbetriebsart erfindungsgemäß durch eine Nacheinspritzung im Anschluss an die Haupteinspritzung und gegebenenfalls die Voreinspritzungen geschaffen, wobei der nachträglich eingespritzte Kraftstoff an der bereits erfolgenden Verbrennung teilnimmt. Die Einregelung der gewünschten Abgaszusammensetzung wird zusätzlich durch die geeignete Einstellung des Abgasrückführungsventils beeinflusst. Des Weiteren nimmt die Steuereinheit 14 durch Ansteuerung einer Drosseleinrichtung in der Ansaugluftleitung 20 und eine Aufladeeinrichtung im Abgastrakt auf die Einstellung des Kraftstoff/Luft-Verhältnisses λ Einfluss.

Als Drosseleinrichtung kann eine Drosselklappe 8 in der Ansaugluftleitung vorgesehen sein, die über ein entsprechendes Stellglied 9 mittels eines Stellantriebes 10 von der Steuereinheit 14 in die aus einem entsprechenden Kennfeld (Fig. 2) ausgelesene Position gebracht wird. Alternativ zu der Drosselklappe 8 in der Ansaugluftleitung 20 kann in jedem Einlassstutzen 24 der Zylinder 23 ein Drosselorgan 11 angeordnet sein. Die Steuereinheit 14 stellt alle Drosseleinrichtungen 11 in den Einlassstutzen 24 über ein gemeinsames Stellglied 12 und einen auf das Stellglied 12 wirkenden Stellantrieb 13 ein. Als weiteres Stellglied mit Wirkung auf das Kraftstoff/Luft-Verhältnis beaufschlagt die Steuereinheit 14 eine Aufladeeinrichtung im Abgastrakt, die im vorliegenden Ausführungsbeispiel ein Abgasturbolader 5 ist, der aus einer vom Abgas beaufschlagten Turbine 27 und einem auf die Frischluft wirkenden Verdichter 28 besteht. Das Stellglied 6 des Abgasturboladers, das über dem Stellantrieb 7 von der Steuereinheit bedarfsweise einstellbar ist, kann beispielsweise eine variabel einstellbare Turbinengeometrie sein.

Der Dieselmotor wird mit dem erfindungsgemäßen Verfahren im Sonderbetriebszustand mit einer mitbrennenden Nacheinspritzung betrieben, die sich an eine beliebige Anzahl an Voreinspritzungen und ein bis zwei Haupteinspritzungen anschließt. Des weiteren kann eine weitere zeitlich abgesetzte Nacheineinspritzung in den Brennraum eingebracht werden, wobei der hier eingespritzte Kraftstoff nicht mehr an der Verbrennung teilnimmt und zur Schaffung einer Abgasatmosphäre beiträgt, die über eine längere Betriebszeit effizienter von dem Katalysator reinigbar ist. Die erfindungsgemäße Nacheinspritzung wird bezüglich Einspritzzeitpunkt und -dauer so ausgelegt, dass je nach Bedarf überstöchiometrische oder unterstöchiometrische Luftverhältnisse geschaffen werden. Der maximale Druckanstieg im Brennraum und die zeitliche Lage des maximalen Druckanstieges entsprechen bei dem erfindungsgemäßen Verfahren in etwa den Werten im Normalbetrieb mit lediglich Vor- und Haupteinspritzung. Die Regelung der Motorlast erfolgt über die an der Verbrennung teilnehmende Einspritzmenge, also im Sonderbetriebszustand unter Einschluss und maßgeblicher Berücksichtigung der mitbrennenden Nacheinspritzmenge. Mit dem erfindungsgemäßen Verfahren können ohne Anhebung der Geräuschentwicklung rasch höhere Abgastemperaturen und Abgasenthalpien erreicht werden und so die Effizienz von Katalysatoren auch insbesondere während der Warmlaufphase gesteigert werden.

Die Anteile der Haupteinspritzmenge und der Nacheinspritzmenge an der gesamten Einspritzmenge bzw. deren Änderungen während der Übergangsphase beim Wechsel der Betriebsart von fetter zu magerer Verbrennung und umgekehrt wird von der Steuereinheit in Abhängigkeit eines oder mehrerer Betriebsparameter 19 (Fig. 2) eingestellt. Als solche Betriebsparameter, mit denen die Kennfelder für die jeweils zu wählende Betriebsart ausgelesen werden, kommen die folgenden physikalisch messbaren Größen in Frage:
- Motordrehmoment und seine Ableitung
- Motordrehzahl und ihre Ableitung
- Fahrgeschwindigkeit eines vom Dieselmotor angetriebenen Fahrzeuges
- Fahrstufe/Gang
- Gesamteinspritzmenge
- Luftmasse und ihre Ableitung
- Kühlmitteltemperatur
- Außenlufttemperatur
- Saugrohrtemperatur
- Abgastemperatur
- Atomsphärendruck
- Saugrohrdruck
- Abgasdruck

## Patentansprüche

1. Verfahren zum Betrieb eines Dieselmotors, bei dem eine Steuereinheit (14) ein Luftverhältnis des zu verbrennenden Kraftstoffes und der zugeführten Verbrennungsluft nach vorgegebenen Werten für den Betriebszustand des Motors (1) durch Ansteuerung hierfür vorgesehener Stellmittel (2, 5, 8, 11, 25) einstellt und dabei die der angeforderten Betriebslast des Dieselmotors (1) entsprechenden Menge zu verbrennenden Kraftstoffes bestimmt, wobei die Steuereinheit (14) bei Feststellung eines als Umschaltkriterium vorgegebenen Wertes einer Betriebsmessgröße (15) des Dieselmotors auf eine Sonderbetriebsart zur Regeneration einer Einrichtung zur Abgasnachbehandlung umschaltet und das Kraftstoff/Luft-Verhältnis nach Vorgabewerten für diese Betriebsart einstellt, wobei in der Sonderbetriebsart mindestens eine erste Kraftstoffnacheinspritzung im Anschluss an eine Haupteinspritzung derart erfolgt, dass der nacheingespritzte Kraftstoff an der Verbrennung des bereits vorher zugemessenen und entzündeten Kraftstoffs teilnimmt,
**dadurch gekennzeichnet, dass**
zum Einstellen eines lastneutralen Überganges beim Umschalten vor einer Änderung einer Menge der Nacheinspritzung ein Saugrohrdruck und ein Frischluft-Massenstrom eingeregelt werden.

2. Verfahren nach Anspruch 1,
**dadurch gekennzeichnet, dass**
die Kraftstoffmenge der Nacheinspritzung dem Betriebszustand des Dieselmotors (1) entsprechend dosiert wird.

3. Verfahren nach Anspruch 1 oder 2,
**dadurch gekennzeichnet, dass**
die Steuereinheit (14) den Einspritzzeitpunkt der Nacheinspritzung entsprechend dem Betriebszustand des Dieselmotors (1) einstellt.

4. Verfahren nach einem der Ansprüche 1 bis 3,
**dadurch gekennzeichnet, dass**
die Steuereinheit (14) während einer Umschaltphase beim Umschalten in den Sonderbetriebszustand und zurück die Kraftstoffmenge der Nacheinspritzung bei gleichzeitiger Reduzierung der Haupteinspritzmenge in entsprechender Menge bei aufeinanderfolgenden Zyklen erhöht bis zum Erreichen der vorgesehenen Nacheinspritzmenge bzw. beim Rückschalten in einen Normalbetriebszustand die Nacheinspritzmenge reduziert bei analoger Erhöhung der Haupteinspritzmenge.

5. Verfahren nach Anspruch 4,
**dadurch gekennzeichnet, dass**
die analoge Änderung der Haupteinspritzmenge und der Nacheinspritzmenge während der Umschaltphase unter Berücksichtigung einer Regelgröße geregelt wird.

6. Verfahren nach Anspruch 5,
**dadurch gekennzeichnet, dass**
als Regelgröße ein indiziertes Moment des Dieselmotors (1) herangezogen wird, welches während der Umschaltphase konstant gehalten wird.

7. Verfahren nach einem der Ansprüche 1 bis 6,
**dadurch gekennzeichnet, dass**
dem Abgas zusätzlicher Kraftstoff zur Schaffung des vorgesehenen Kraftstoff/Luft-Verhältnisses im Abgas zugesetzt wird.

8. Verfahren nach Anspruch 7,
**dadurch gekennzeichnet, dass**
der zusätzliche Kraftstoff dem Abgas durch eine zusätzliche Nacheinspritzung im Anschluss an die erste Nacheinspritzung zugesetzt wird.

9. Verfahren nach Anspruch 7,
**dadurch gekennzeichnet, dass**
der zusätzliche Kraftstoff dem Abgas in einer Abgasleitung des Dieselmotors (1) zugesetzt wird.

10. Verfahren nach einem der Ansprüchen 1 bis 9,
**dadurch gekennzeichnet, dass**
in der Normalbetriebsart ein über- oder unterstöchiometrisches Kraftstoff/Luft-Verhältnis und in der Sonderbetriebsart ein unter- oder überstöchiometrisches Kraftstoff/Luft-Verhältnis eingestellt wird.

11. Verfahren nach einem der Ansprüche 1 bis 10,
**dadurch gekennzeichnet, dass**
die Steuereinheit (14) bei der Einstellung des Kraftstoff/Luft-Verhältnisses die dem Frischgas beigemischte Menge rückgeführten Abgases berücksichtigt und ein Abgasrückführungsventil (2) in einer Abgasrückführungsleitung (26) des Dieselmotors (1) als Stellglied der Regelung des Kraftstoff/Luft-Verhältnisses ansteuert.

12. Verfahren nach einem der Ansprüche 1 bis 11,
**dadurch gekennzeichnet, dass**
die Steuereinheit (14) den Druck der zugeführten Frischluft regelt.

13. Verfahren nach Anspruch 12,
**dadurch gekennzeichnet, dass**
die Regelung des Frischluftdruckes über Drosselklappen (8, 11) und eine einstellbare Aufladeeinrichtung (5) als Stellglieder erfolgt.

14. Verfahren nach Anspruch 12,
**dadurch gekennzeichnet, dass**
die Regelung des Frischluftdruckes über das Abgasrückführungsventil (2) und eine einstellbare Aufladeeinrichtung (5) als Stellglieder erfolgt.

15. Verfahren nach einem der Ansprüche 12 bis 14,
**dadurch gekennzeichnet, dass**
die Steuereinheit (14) den Massendurchsatz der Frischluft regelt.

16. Verfahren nach Anspruch 15,
**dadurch gekennzeichnet, dass**
die Regelung des Massendurchsatzes über das Abgasrückführungsventil (2) als Stellglied unter Berücksichtung eines Messsignals eines Luftmassenmessers erfolgt.

17. Verfahren nach Anspruch 15,
**dadurch gekennzeichnet, dass**
die Regelung des Massendurchsatzes über Drosselorgane (8, 11) als Stellglieder erfolgt.

18. Verfahren nach einem der Ansprüche 1 bis 17,
**dadurch gekennzeichnet, dass**
die Steuereinheit (14) alle von ihr angesteuerten Stellglieder (2, 6, 9, 12, 25) in Abhängigkeit der erfassten Regelabweichung im gesamten Betriebsbereich des Dieselmotors (1) nachführt.

## Claims

1. Method for operating a diesel engine, wherein a control unit (14) adjusts an air ratio of the fuel to be combusted and the supplied combustion air to preset values for the operating state of the engine (1) by activating adjusting means (2, 5, 8, 11, 25) provided for this purpose and thereby determines the amount of fuel to be combusted in accordance with the requested operating load of the diesel engine (1), wherein the control unit (14), on detecting a value of a measured operating variable (15) of the diesel engine which is preset as a switch-over criterion, switches to a special operating mode for the regeneration of a device for exhaust treatment and adjusts the air/fuel ratio to preset values for this operating mode, wherein in the special operating mode at least one first fuel post-injection is performed following a main injection in such a way that the post-injected fuel participates in the combustion of the previously metered and ignited fuel,
**characterised in that**
for setting a load-neutral transition during switch-over before a change in a post-injection amount, an inlet manifold pressure and a fresh air mass flow are adjusted.

2. Method according to claim 1,
**characterised in that**
the fuel quantity of the post-injection is metered in accordance with the operating state of the diesel engine (1).

3. Method according to claim 1 or 2,
**characterised in that**
the control unit (14) adjusts the time of the post-injection in accordance with the operating state of the diesel engine (1).

4. Method according to any of claims 1 to 3,
**characterised in that**
the control unit (14), during a switch-over phase when switching to the special operating mode and back, increases the fuel quantity of the post-injection while simultaneously reducing the main injection quantity accordingly in consecutive cycles until the preset post-injection quantity is reached and, when switching back to a normal operating mode, reduces the post-injection quantity while analogously increasing the main injection quantity.

5. Method according to claim 4,
**characterised in that**
the analogous change of the main injection quantity and the post-injection quantity is controlled during the switch-over phase, taking account of a control variable.

6. Method according to claim 5,
**characterised in that**
an indicated torque of the diesel engine (1), which is held constant during the switch-over phase, is used as a control variable.

7. Method according to any of claims 1 to 6,
**characterised in that**
additional fuel is added to the exhaust gas to create the intended air/fuel ratio in the exhaust gas.

8. Method according to claim 7,
**characterised in that**
the additional fuel is added to the exhaust gas by means of an additional post-injection following the first post-injection.

9. Method according to claim 7,
**characterised in that**
the additional fuel is added to the exhaust gas in an exhaust pipe of the internal combustion engine (1).

10. Method according to any of claims 1 to 9,
**characterised in that**
an air/fuel ratio lean of or rich of stoichiometry is set in the normal operating mode and an air/fuel ratio rich of or lean of stoichiometry is set in the special operating mode.

11. Method according to any of claims 1 to 10,
**characterised in that**
the control unit (14) takes account of the amount of recirculated exhaust gas added to the fresh gas when adjusting the air/fuel ratio and activates an exhaust gas recirculation valve (2) in an exhaust gas recirculation line (26) of the diesel engine (1) as a control element of the control of the air/fuel ratio.

12. Method according to any of claims 1 to 11,
**characterised in that**
the control unit (14) controls the pressure of the supplied fresh air.

13. Method according to claim 12,
**characterised in that**
the pressure of the fresh air is controlled via throttle valves (8, 11) and an adjustable charging device (5) as control elements.

14. Method according to claim 12,
**characterised in that**
the pressure of the fresh air is controlled via the exhaust gas recirculation valve (2) and an adjustable charging device (5) as control elements.

15. Method according to any of claims 12 to 14,
**characterised in that**
the control unit (14) controls the mass flow rate of the fresh air.

16. Method according to claim 15,
**characterised in that**
the mass flow rate is controlled via the exhaust gas recirculation valve (2) as a control element, taking account of a measurement signal of a mass air flow meter.

17. Method according to claim 15,
**characterised in that**
the mass flow rate is controlled via throttle elements (8, 11) as control elements.

18. Method according to any of claims 1 to 17,
**characterised in that**
the control unit (14) tracks all of the adjusting elements (2, 6, 9, 12, 25) it activates as a function of the detected control deviation in the whole operating range of the diesel engine (1).

## Revendications

1. Procédé de fonctionnement d'un moteur diesel, selon lequel une unité de commande (14) réglant un rapport d'air du carburant à brûler et de l'air de combustion amené selon des valeurs prédéfinies pour l'état de fonctionnement du moteur (1) au moyen de la commande d'éléments de réglage (2, 5, 8, 11, 25) prévus à cet effet et réglant également la quantité de carburant à brûler correspondant à la charge de fonctionnement requise du moteur diesel (1), l'unité de commande (14) lors de la détermination d'une valeur prédéfinie en tant que critère de commutation d'une grandeur de mesure de fonctionnement (15) du moteur diesel commutant dans un type de fonctionnement spécial destiné à la régénération d'une installation de post-traitement des gaz d'échappement et réglant le rapport air/carburant selon des valeurs d'indication pour ledit type de fonctionnement, dans le type de fonctionnement spécial au moins une première post-injection de carburant s'effectue à la suite d'une injection principale, de sorte que le carburant injecté ultérieur participe à la combustion du carburant allumé et préalablement dosé, **caractérisé en ce que** pour le réglage d'un passage sans charge lors de la commutation avant une modification d'une quantité de post-injection, la pression dans une conduite d'aspiration et un flux massique d'air frais sont réglés.

2. Procédé selon la revendication 1, **caractérisé en ce que** la quantité de carburant de la post-injection est dosée en fonction de l'état de fonctionnement du moteur diesel (1).

3. Procédé selon la revendication 1 ou la revendication 2, **caractérisé en ce que** l'unité de commande (14) règle le moment d'injection de la post-injection en fonction de l'état de fonctionnement du moteur diesel (1).

4. Procédé selon l'une quelconque des revendications 1 à 3, **caractérisé en ce que** l'unité de commande (14) pendant une phase de commutation lors de la commutation dans un état de fonctionnement spécial et de retour augmente la quantité de carburant de la post-injection lors de la réduction simultanée de la quantité d'injection principale dans une quantité correspondante pour des cycles successifs jusqu'à ce que la quantité de post-injection prédéfinie ou lors du retour à un état de fonctionnement normal réduise la quantité de post-injection lors d'une augmentation analogue de quantité d'injection principale.

5. Procédé selon la revendication 4, **caractérisé en ce que** la modification analogue de la quantité d'injection principale et la quantité de post-injection pendant la phase de commutation est réglé en tenant compte d'une grandeur réglée.

6. Procédé selon la revendication 5, **caractérisé en ce qu'**en tant que grandeur réglée on a recours à un moment indexé du moteur diesel (1) qui est maintenu contant pendant la phase de commutation.

7. Procédé selon l'une quelconque des revendications 1 à 6, **caractérisé en ce qu'**il est ajouté au gaz d'échappement du carburant supplémentaire destiné à établir le rapport carburant/air prédéfini.

8. Procédé selon la revendication 7, **caractérisé en ce que** le carburant supplémentaire est ajouté au gaz d'échappement au moyen d'une post-injection supplémentaire à la suite de la première post-injection.

9. Procédé selon la revendication 7, **caractérisé en ce que** le carburant supplémentaire est ajouté au gaz d'échappement dans une conduite de gaz d'échappement du moteur diesel (1).

10. Procédé selon l'une quelconque des revendications 1 à 9, **caractérisé en ce que** dans le type de fonctionnement normal il est établi un rapport carburant/air stoéchiométrique inférieur ou supérieur et dans le type de fonctionnement spécial un rapport air/carburant stoéchiométrique inférieur ou supérieur.

11. Procédé selon l'une quelconque des revendications 1 à 10, **caractérisé en ce que** l'unité de commande (14) lors du réglage du rapport carburant/air tient compte de la quantité du gaz d'échappement retourné mélangé au gaz frais et commande une vanne de recyclage de gaz d'échappement (2) dans une conduite de recyclage de gaz d'échappement (26) du moteur diesel (1) en tant qu'élément de commande de la régulation du rapport carburant/air.

12. Procédé selon l'une quelconque des revendications 1 à 11, **caractérisé en ce que** l'unité de commande (14) règle la pression de l'air frais amené.

13. Procédé selon la revendication 12, **caractérisé en ce que** le réglage de la pression d'air frais s'effectue au moyen de papillons des gaz (8, 11) et d'un dispositif de suralimentation réglable (5) en tant qu'éléments de réglage.

14. Procédé selon la revendication 12, **caractérisé en ce que** le réglage de la pression de l'air frais s'effectue au moyen de la vanne de recyclage de gaz d'échappement (2) et d'un dispositif de suralimentation (5) réglable en tant qu'éléments de réglage.

15. Procédé selon l'une quelconque des revendications 12 à 14, **caractérisé en ce que** l'unité de commande (14) règle le débit massique de l'air frais.

16. Procédé selon la revendication 15, **caractérisé en ce que** le réglage du débit massique s'effectue au moyen de la vanne de recyclage de gaz d'échappement (2) en tant qu'élément de réglage en tenant compte d'un signal de mesure d'un débitmètre massique.

17. Procédé selon la revendication 15, **caractérisé en ce que** le réglage du débit massique s'effectue au moyen d'organes d'étranglement (8, 11) en tant qu'éléments de réglage.

18. Procédé selon l'une quelconque des revendications 1 à 17, **caractérisé en ce que** l'unité de commande (14) asservit l'ensemble des éléments de réglage (2, 6, 9, 12, 25) commandée par cette dernière en fonction de l'écart de réglage détecté dans la plage de fonctionnement totale du moteur diesel (1).
